# EUROPÄISCHE PATENTSCHRIFT

(11) **EP 1 721 118 B1**
(45) Veröffentlichungstag und Bekanntmachung des Hinweises auf die Patenterteilung: **26.03.2008**
(21) Anmeldenummer: 05707582.2
(22) Anmeldetag: 23.02.2005
(51) Int. Cl.: G01B 7/012, G01D 5/14

(54) **TASTKOPF FÜR EIN KOORDINATENMESSGERÄT**
SENSING HEAD FOR A COORDINATE MEASURING DEVICE
TETE DE PALPAGE POUR UN APPAREIL DE MESURE DE COORDONNEES

(30) Priorität: 05.03.2004 DE 102004011728
(43) Veröffentlichungstag der Anmeldung: 15.11.2006
(73) Patentinhaber: Carl Zeiss Industrielle Messtechnik GmbH, 73447 Oberkochen (DE)
(72) Erfinder: BRENNER, Kurt, 74589 Satteldorf (DE); JENISCH, Walter, 89520 Heidenheim (DE); ENDERLE, Eckhard, 73434 Aalen (DE)
(74) Vertreter: Duhme, Torsten
(86) Internationale Anmeldenummer: PCT/EP2005/001858
(87) Internationale Veröffentlichungsnummer: WO 2005/088239

(56) Entgegenhaltungen:
- DE-A1- 3 721 682
- DE-C1- 4 439 578
- GB-A- 2 238 616
- US-A- 4 528 758
- US-A- 4 866 854

## Beschreibung

Die vorliegende Erfindung betrifft einen Tastkopf für ein Koordinatenmessgerät, mit einem in einem Gehäuse beweglich gelagerten Taststift und mit einer Sensoranordnung zum Erfassen von Auslenkungen des Taststiftes relativ zu dem Gehäuse, wobei die Sensoranordnung einen ersten Magneten und ein Hallelement aufweist.

Die Erfindung betrifft ferner ein Koordinatenmessgerät zum Vermessen einer Objektform eines Messobjekts, mit einem Verschiebegestell, an dem ein Tastkopf mit einem Taststift zum Antasten des Messobjekts angeordnet ist, und mit einer Auswerteeinheit, die dazu ausgebildet ist, eine aktuelle Raumposition des Tastelements zu bestimmen.

Ein gattungsgemäßer Tastkopf für ein entsprechendes Koordinatenmessgerät ist beispielsweise aus US 4866854, US 4528758 oder DE37 21 682 A1 bekannt.

Gattungsgemäße Koordinatenmessgeräte werden u.a. dazu verwendet, die Objektform eines Messobjekts mit großer Genauigkeit zu vermessen. Beispielsweise wird auf diese Weise die Objektform von maschinell hergestellten Werkstücken zur Qualitätskontrolle überprüft. Für den Messvorgang wird der Tastkopf des Koordinatenmessgerätes mit dem Verschiebegestell so weit an das Messobjekt herangefahren, bis der beweglich gelagerte Taststift einen gewünschten Messpunkt am Messobjekt berührt. Anschließend kann aus der Stellung des Tastkopfes und der relativen Lage des Taststiftes zum Tastkopf die Raumkoordinate des angetasteten Messpunktes mit hoher Genauigkeit bestimmt werden.

Der in der eingangs genannten DE 37 21 682 A1 beschriebene Tastkopf ist von seiner Bauart nur dazu ausgelegt, eindimensionale Messungen, d.h. Messungen in nur einer Raumrichtung, vorzunehmen. Die Auslenkung des Taststiftes relativ zum Tastkopf wird in einem konkreten Ausführungsbeispiel mit Hilfe von induktiven Längssensoren bestimmt. Alternativ hierzu werden ganz allgemein weitere Lagesensoren vorgeschlagen, u.a. ein Hallelement. Einzelheiten eines messenden Tastkopfes mit einem Hallelement als Bestandteil der Sensoranordnung sind jedoch nicht beschrieben.

Aus DE 26 20 099 C2 ist ein Tastkopf mit allseitig auslenkbarem Taststift bekannt. Zur messtechnischen Erfassung der Bewegung des Taststiftes wird hier ebenfalls eine induktive Sensoranordnung verwendet. Hierzu sind in allen drei Achsen jeweils zwei induktive Sensoren vorgesehen, die auf gegenüberliegenden Seiten eines Endes des Taststiftes angeordnet sind. Die induktiven Sensoren sind zu einer Brückenschaltung verschaltet.

Aus DE 37 20 524 A1 ist eine sogenannte Messkluppe bekannt, bei der ein Hallelement verwendet wird, um die Längsposition eines verschieblichen Läufers zu bestimmen. Das Hallelement ist im Abstand von und im Wesentlichen symmetrisch zu einem Paar von nebeneinanderliegenden Magneten angeordnet. Zur Messung der Längsposition des Läufers wird das Hallelement im Abstand an den Magneten vorbeigeführt.

Aus DE 37 08 105 A1 ist ein Koordinatenmessgerät mit einem Tastkopf für dreidimensionale Messungen bekannt. Für die Sensoranordnung, die die Auslenkung des Taststiftes erfasst, werden magnetoresistive Elemente, d.h. magnetabhängige Widerstände, vorgeschlagen. Um eine gewisse Ortsauflösung zu erreichen, wird ein Raster aus einer Vielzahl derartiger Widerstände verwendet.

Die Verwendung von Hallelementen bei einer Sensoranordnung zur messtechnischen Positionserfassung ist darüber hinaus aus einer Vielzahl anderer Anwendungen bekannt. Bei einer Vorrichtung gemäß DE 198 23 059 C2 wird eine Ortsauflösung ähnlich wie bei DE 37 08 105 A1 durch eine Matrixanordnung der Hallelemente ermöglicht. Nach DE 197 12 829 A1 werden Hallelemente zur Bestimmung der Kolbenposition in Pneumatikzylindern verwendet. DE 196 39 801 A1 schlägt vor, einen Hallsensor zur Positionserfassung bei Scheibenwischern einzusetzen.

In den bekannten Anwendungsfällen wird eine variable Raumposition entweder über eine Vielzahl matrixartig angeordneter Hallelemente oder über ein Hallelement mit einer Vielzahl von Magneten als Inkrementalgeber bestimmt. In den verbleibenden Fällen, in denen nur ein Hallelement und ein Magnet zur Anwendung kommt, erfolgt die Positionserfassung im Sinne einer Ja-Nein-Entscheidung, d.h. es handelt sich hier nicht um eine messtechnische Erfassung einer variablen Entfernung oder Länge.

Aus einer Veröffentlichung der Firma Allegro MicroSystems Inc., Worcester, Massachusetts, USA unter dem Titel "Applications Information 27702A" sind verschiedene Anordnungen bekannt, wie Hallsensoren in Verbindung mit Magneten für Messzwecke eingesetzt werden können. Anwendungen im Bereich der Koordinatenmesstechnik sind jedoch nicht angedeutet.

In DE 103 48 887 A1 ist ein Tastkopf für ein Koordinatenmessgerät beschrieben, bei dem die Auslenkung des Taststiftes mit einer Anordnung kontinuierlich messender Hallelemente erfasst wird. Die vorliegende Anmeldung unterscheidet sich von dieser älteren Anordnung durch die Art, in der die Hallelemente in der Sensoranordnung verwendet sind.

Es ist vor diesem Hintergrund eine Aufgabe der vorliegenden Erfindung, einen Tastkopf der eingangs genannten Art anzugeben, der eine hoch auflösende Messung von Raumkoordinaten mit geringem apparativen und wirtschaftlichen Aufwand ermöglicht.

Diese Aufgabe wird mit einem Tastkopf gemäss Anspruch 1 gelöst.

Der neue Tastkopf beruht damit auf der Idee, die Auslenkungen des Taststiftes mit Hilfe eines Hallelements zu erfassen, das sich zwischen zwei einander gegenüberliegenden Magneten bewegt. Durch diese spezielle Anordnung ist eine sehr exakte Messwertaufnahme über einen relativ großen Messbereich hin möglich. Zudem benötigt der neue Tastkopf für die messtechnische Erfassung einer Raumrichtung weder mehrere Hallelemente noch weitere als die beiden genannten Magnete, wie dies beispielsweise bei einer Inkrementalmessung erforderlich wäre. Die Auslenkung des Taststiftes kann vielmehr aus der Amplitude des Ausgangssignals des Hallelements eindeutig abgeleitet werden. Insofern handelt es sich bei der hier vorgeschlagenen Anordnung um eine kontinuierliche Messwertaufnahme, die mit Hilfe eines einzigen Hallelements (pro Raumrichtung) durchführbar ist. Dabei kann die vorgeschlagene Anordnung sehr kompakt und raumsparend realisiert werden.

Die genannte Aufgabe ist daher vollständig gelöst.

In einer Ausgestaltung sind der erste und der zweite Magnet mit jeweils gleichnamigen Polen aufeinander zuweisend angeordnet und das Hallelement ist so angeordnet, dass es sich bei einer Auslenkung des Taststiftes parallel zu einer gedachten Fluchtlinie zwischen den gleichnamigen Polen bewegt. Vorzugsweise bewegt sich das Hallelement auf der gedachten Fluchtlinie zwischen den gleichnamigen Polen, d.h. es ist im nicht-ausgelenkten Zustand etwa zentrisch zwischen den Magneten angeordnet.

In dieser Ausgestaltung bewegt sich das Hallelement bei einer Auslenkung des Taststiftes in etwa senkrecht zu den aufeinander zuweisenden Oberflächen der Magnete. Alternativ hierzu wäre es grundsätzlich auch möglich, das Hallelement bei einer Auslenkung des Taststiftes parallel zu den genannten Oberflächen der Magnete zu führen, wie dies vom Grundsatz her in DE 103 48 887 A1 beschrieben ist (dort bewegt sich das Hallelement allerdings nicht zwischen zwei einander gegenüberliegenden Magneten). Die hier bevorzugte Ausgestaltung ermöglicht eine besonders hohe Messgenauigkeit über einen großen Messbereich sowie eine sehr kompakte und nach außen hin abgrenzbare Bauform. Darüber hinaus ist die bevorzugte Ausgestaltung relativ unempfindlich gegenüber Montagetoleranzen, was die Herstellung des neuen Tastkopfes erleichtert.

In einer weiteren Ausgestaltung ist das Hallelement bei nicht-ausgelenktem Taststift in gleichem Abstand zu dem ersten und dem zweiten Magneten angeordnet.

Diese Ausgestaltung besitzt den Vorteil, dass die Ausgangsspannung des Hallelements im nicht-ausgelenkten Zustand des Taststiftes etwa bei 0 Volt liegt, so dass sich die Richtung einer Auslenkung bereits am Vorzeichen der Ausgangsspannung ablesen lässt. Hierdurch wird die Auswertung vereinfacht und der Messbereich symmetrisch ausgenutzt. Daher ermöglicht diese Ausgestaltung auch eine besonders hohe Messgenauigkeit über einen großen Messbereich hinweg.

In einer weiteren Ausgestaltung besitzen der erste und der zweite Magnet quer zur Bewegungsrichtung des Hallelements jeweils eine Breite, die etwa 5 mm oder mehr beträgt.

Mit anderen Worten sind der erste und zweite Magnet quer zur Bewegungsrichtung des Hallelements "sehr groß". Typischerweise besitzt ein kommerziell erhältliches Hallelement eine magnetisch wirksame Fläche, deren Breite in der bevorzugten Ausgestaltung etwa 1/10 oder weniger der Breite der Magnete beträgt. Wie sich bei praktischen Versuchen der Anmelderin gezeigt hat, ist es in dieser Ausgestaltung sehr einfach möglich, die erhaltenen Messwerte exakt einer einzigen Raumrichtung zuzuordnen. Mit anderen Worten ist das Ausgangssignal des Hallelements in dieser Ausgestaltung nahezu unabhängig von Auslenkungen des Taststiftes quer zur gewünschten (relativen) Bewegungsrichtung des Hallelements. Andererseits ermöglicht die gewählte Abmessung der Magnete immer noch eine kompakte Bauform, was insbesondere bei dynamischen Messvorgängen von Vorteil ist.

In einer weiteren Ausgestaltung sind der erste und der zweite Magnet mit dem beweglichen Taststift gekoppelt, während das Hallelement auf einer Basis angeordnet ist, die relativ zu den Magneten feststehend ist.

Alternativ hierzu wäre es grundsätzlich auch möglich, das Hallelement mit dem beweglichen Taststift zu koppeln und die Magnete feststehend anzuordnen. Die bevorzugte Ausgestaltung führt jedoch zu genaueren Messergebnissen, da Hystereseeffekte aufgrund von Zuleitungskabeln minimiert sind.

In einer weiteren Ausgestaltung weist die Sensoranordnung zumindest ein weiteres Hallelement auf, das um etwa 90° verdreht zu dem ersten Hallelement angeordnet ist.

Diese Ausgestaltung ermöglicht es auf sehr einfache Weise, die Auslenkung des Taststiftes in zwei oder mehr Raumrichtungen zu bestimmen.

In einer weiteren Ausgestaltung weist die Sensoranordnung zumindest einen dritten und einen vierten Magneten auf, zwischen denen zumindest das weitere Hallelement angeordnet ist.

In dieser Ausgestaltung besitzt jedes der Hallelemente seine "eigenen" Magnete. Daher ist hier eine sehr gute Entkopplung zwischen den einzelnen Raumrichtungen gegeben. Die Messgenauigkeit wird verbessert.

In einer weiteren Ausgestaltung sind der dritte und vierte Magnet sowie das weitere Hallelement räumlich getrennt von dem ersten und zweiten Magneten angeordnet.

Die vollständige räumliche Trennung ermöglicht noch höhere Messgenauigkeit, da die einzelnen Teil-Sensoranordnungen noch besser voneinander entkoppelt sind.

In einer weiteren Ausgestaltung sind das erste und das weitere Hallelement zwischen dem ersten und dem zweiten Magneten angeordnet.

In dieser Ausgestaltung sind die Teil-Sensoranordnungen räumlich miteinander kombiniert. Wie sich aus Versuchen der Anmelderin gezeigt hat, kann auch in diesem Fall eine hinreichende Messgenauigkeit erreicht werden. Darüber hinaus ist diese Ausgestaltung besonders kleinbauend und mit geringerem Gewicht zu realisieren.

In einer weiteren Ausgestaltung sind die Magnete an einem gemeinsamen Trägerelement befestigt. Bevorzugt ist das gemeinsame Trägerelement ein Flussführungselement, d.h. es besteht aus einem Material mit geringem magnetischem Widerstand, welches die magnetischen Feldlinien in sich konzentriert.

Die Anordnung der Magnete an einem gemeinsamen Trägerelement führt zu einem modulartigen Aufbau der Sensoranordnung. Hierdurch wird die Montage vereinfacht und der neue Tastkopf somit kostengünstiger. Die Verwendung eines magnetisch leitfähigen Materials für das Trägerelement, d.h. die Ausbildung des Trägerelements als Flussführungselement für die magnetischen Feldlinien, führt darüber hinaus zu einer Erhöhung der Messgenauigkeit, da die magnetische Feldverteilung hierdurch exakter bestimmt ist. Zudem werden Einflüsse von externen Störfeldern reduziert.

In einer weiteren Ausgestaltung weist das Flussführungselement einen ersten und einen zweiten Ringabschnitt auf, wobei der erste Ringabschnitt den ersten und zweiten Magneten ringförmig verbindet und wobei der zweite Ringabschnitt den dritten und vierten Magneten ringförmig verbindet.

Durch diese Ausgestaltung wird eine noch bessere Entkopplung zwischen den beiden Teil-Sensoranordnungen erreicht, wodurch sich die Messgenauigkeit nochmals steigern lässt.

In einer weiteren Ausgestaltung weist das Flussführungselement einen Brückenabschnitt auf, der den ersten und zweiten Ringabschnitt miteinander verbindet, wobei der Brückenabschnitt mit dem Taststift gekoppelt ist.

Diese Ausgestaltung führt zu einem besonders kompakten und kostengünstigen Aufbau der Sensoranordnung. Außerdem erhält die Sensoranordnung in dieser Ausgestaltung eine symmetrische Gewichtsverteilung, was vor allem bei dynamischen Messvorgängen von Vorteil ist und eine gleichmäßig hohe Messgenauigkeit ermöglicht.

In einer weiteren Ausgestaltung besitzt der Tastkopf Federelemente, die eine Auslenkung des Taststiftes in zumindest zwei Raumrichtungen ermöglichen, wobei die Sensoranordnung räumlich getrennt von den Federelementen angeordnet ist.

Im Gegensatz hierzu ist es bei vielen gattungsgemäßen Tastköpfen üblich, Messsensoren in den Führungsebenen der Federelemente, bei Federparallelogrammen also beispielsweise zwischen den parallelen Federteilen, anzuordnen. Die von den Federelementen räumlich abgesetzte Anordnung besitzt demgegenüber den Vorteil, dass Ablauf- und Führungsfehler der Federelemente mit erfasst werden können, wodurch die Messgenauigkeit weiter erhöht ist. Dieser Vorteil lässt sich durch die neue Verwendung des Hallelements zwischen den beiden Magneten besonders einfach und kostengünstig erreichen.

In einer weiteren Ausgestaltung beinhalten die Federelemente eine Membranfeder, die die Auslenkung des Taststiftes in zwei Raumrichtungen entlang einer Kardanebene ermöglicht, wobei die Sensoranordnung außerhalb der Kardanebene angeordnet ist.

Diese Ausgestaltung ist eine besonders bevorzugte Realisierung, da sie über einen großen Messbereich hinweg eine hohe Messgenauigkeit bei einfacher und kompakter Bauform ermöglicht.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Koordinatenmessgerät mit einem Ausführungsbeispiel des neuen Tastkopfes,
- Fig. 2: die Aufhängung des beweglichen Taststiftes bei einem bevorzugten Ausführungsbeispiel des neuen Tastkopfes,
- Fig. 3: ein erstes bevorzugtes Ausführungsbeispiel einer Sensoranordnung für den neuen Tastkopf,
- Fig. 4: ein weiteres bevorzugtes Ausführungsbeispiel für eine Sensoranordnung,
- Fig. 5: ein Beispiel für eine Sensoranordnung, die aber keine Ausführungsart der Erfindung ist, und
- Fig. 6: ein weiteres bevorzugtes Ausführungsbeispiel für eine Sensoranordnung.

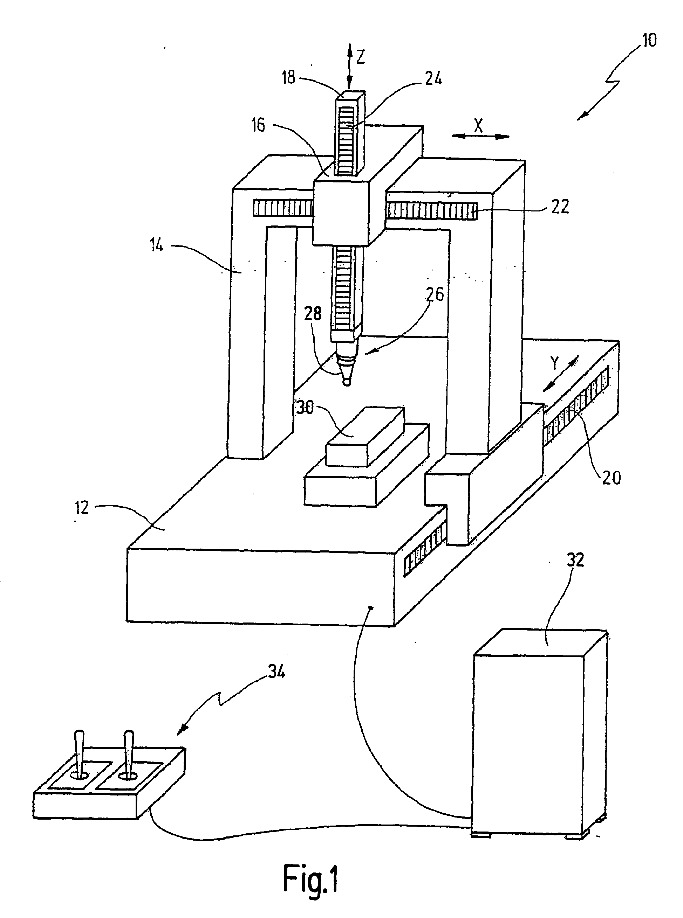

In Fig. 1 ist ein Koordinatenmessgerät in seiner Gesamtheit mit der Bezugsziffer 10 bezeichnet. Das Koordinatenmessgerät 10 besitzt eine Grundplatte 12, auf der ein Portal 14 in Längsrichtung verschieblich angeordnet ist. Diese Längsrichtung wird üblicherweise als Y-Achse bezeichnet. Am oberen Querträger des Portals 14 ist ein in X-Richtung verschieblicher Schlitten 16 angeordnet, der wiederum eine in Z-Richtung verstellbare Pinole 18 trägt. Mit den Bezugsziffern 20, 22, 24 sind Skalen bezeichnet, an denen sich die jeweilige Verstellposition des Portals 14, des Schlittens 16 und der Pinole 18 in den drei Raumrichtungen X, Y, Z ablesen lässt. Die Skalen 20, 22, 24 können dabei typische Messskalen sein, die von einem Bediener des Koordinatenmessgerätes 10 abgelesen werden. Alternativ und/oder ergänzend handelt es sich hier jedoch um Wegmessgeber, die maschinell ausgelesen werden können.

Am unteren freien Ende der Pinole 18 ist in an sich bekannter Weise ein Tastkopf 26 angeordnet, der einen hier nicht maßstabsgetreu dargestellten Taststift 28 trägt. Mit dem Taststift 28, der auch eine andere Form als hier dargestellt besitzen kann und der auch auswechselbar sein kann, werden definierte Messpunkte eines Messobjekts 30 angetastet. Das Messobjekt 30 ist dabei auf der Grundplatte 12 des Koordinatenmessgeräts 10 angeordnet. Aus der Stellung des Tastkopfes 26 im Messvolumen des Koordinatenmessgerätes 10 sowie der Auslenkung des Taststiftes 28 relativ zum Tastkopf kann dann die Raumkoordinate des angetasteten Messpunktes in an sich bekannter Weise bestimmt werden.

Mit der Bezugsziffer 32 ist eine Auswerte- und Steuereinheit bezeichnet, über die das Koordinatenmessgerät 10 gesteuert wird. Des Weiteren wertet die Auswerte- und Steuereinheit 32 die jeweilige Position von Tastkopf 26 und Taststift 28 aus, und sie stellt die Messergebnisse zur Dokumentation und/oder weiteren Verarbeitung bereit. Mit der Bezugsziffer 34 ist ein Bedienpult bezeichnet, über das der Tastkopf 26 hier auch manuell gesteuert werden kann. Ein solches Bedienpult kann jedoch auch fehlen.

Das Koordinatenmessgerät 10 ist hier in sogenannter Portalbauweise dargestellt. Die Erfindung ist hierauf jedoch nicht beschränkt und kann gleichermaßen bei Koordinatenmessgeräten in anderen Bauformen, beispielsweise in Horizontalarmbauweise, angewendet werden.

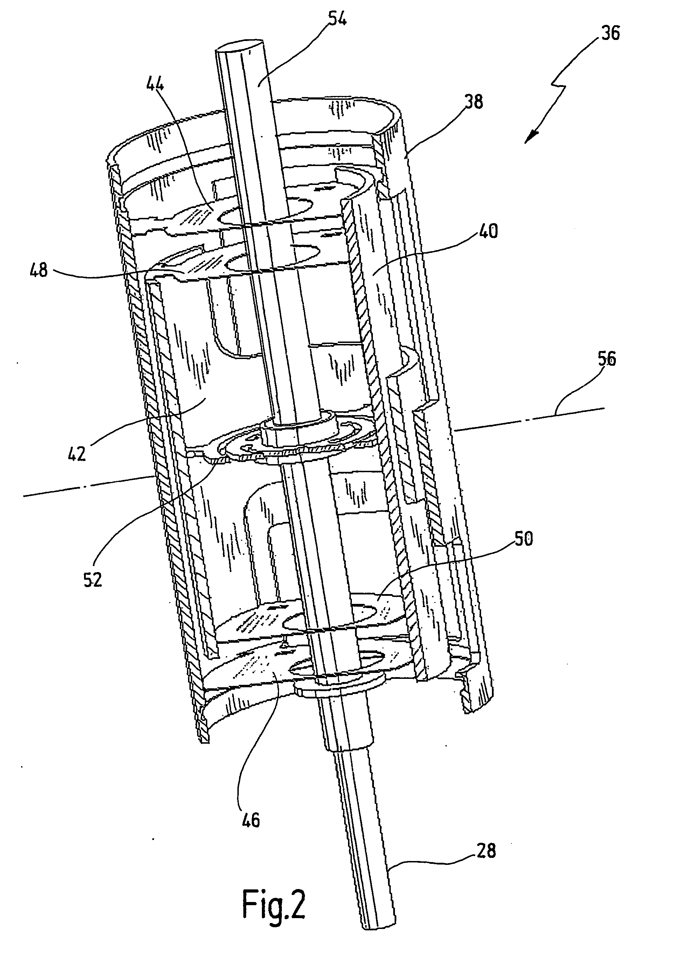

In Fig. 2 ist das sogenannte Kinematikmodul eines bevorzugten Ausführungsbeispiels des Tastkopfes 26 in seiner Gesamtheit mit der Bezugsziffer 36 bezeichnet.

Das Kinematikmodul 36 besitzt einen feststehenden Teil 38, der mit dem Gehäuse des Tastkopfes 26 verbunden ist oder auch Bestandteil des Tastkopfgehäuses sein kann. Das Gehäuseteil 38 besitzt hier eine zylindrische Bauform. In seinem Inneren ist ein erstes und ein zweites zylinderschalenförmiges Teil 40, 42 angeordnet. Das erste zylinderschalenförmige Teil 40 ist über zwei Blattfedern 44, 46 beweglich an dem Gehäuseteil 38 befestigt. Das zweite zylinderschalenförmige Teil 42 ist über zwei weitere Blattfedern 48, 50 beweglich an dem ersten beweglichen Teil 40 befestigt. Dabei stehen sich die beiden beweglichen Teile 40, 42 diametral gegenüber. Insgesamt wird durch die Anordnung aus Gehäuseteil 38, den beweglichen Teilen 40, 42 sowie den Blattfedern 44 bis 50 ein sogenanntes Doppelfederparallelogramm gebildet. Dieses ermöglicht eine Auslenkung des Taststiftes in Z-Richtung gegenüber dem Gehäuseteil 38.

Innerhalb des Doppelfederparallelogramms ist eine Membranfeder 52 angeordnet. Die Membranfeder 52 sitzt etwa mittig zwischen den Blattfedern 44, 48 auf der einen Seite des Doppelfederparallelogramms und den Blattfedern 50, 46 auf der anderen Seite. Sie ist ferner zwischen den beiden beweglichen Teilen 40, 42 befestigt und trägt eine Taststiftverlängerung 54. Die Taststiftverlängerung 54 ist ihrerseits mit dem Taststift 28 verbunden.

Durch die gezeigte Anordnung der Federelemente 44 bis 52 kann die Taststiftverlängerung 54 (und mit ihr der Taststift 28) in drei Raumrichtungen relativ zu dem feststehenden Gehäuseteil 38 ausgelenkt werden. In X- und Y-Richtung erfolgt die Auslenkung in einer Kardanebene 56, die durch die Membranfeder 52 festgelegt wird. Die Auslenkung senkrecht dazu, d.h. in Z-Richtung, wird durch das Doppelfederparallelogramm ermöglicht.

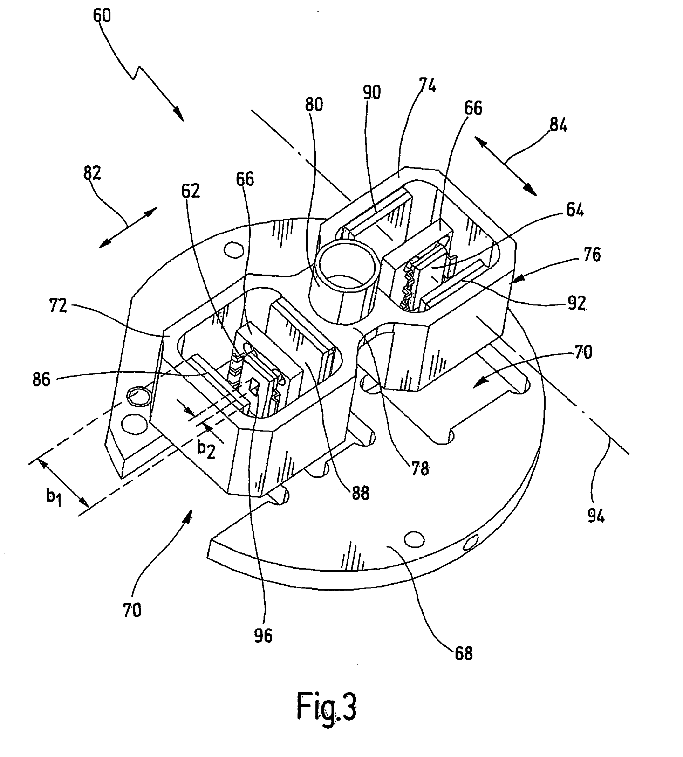

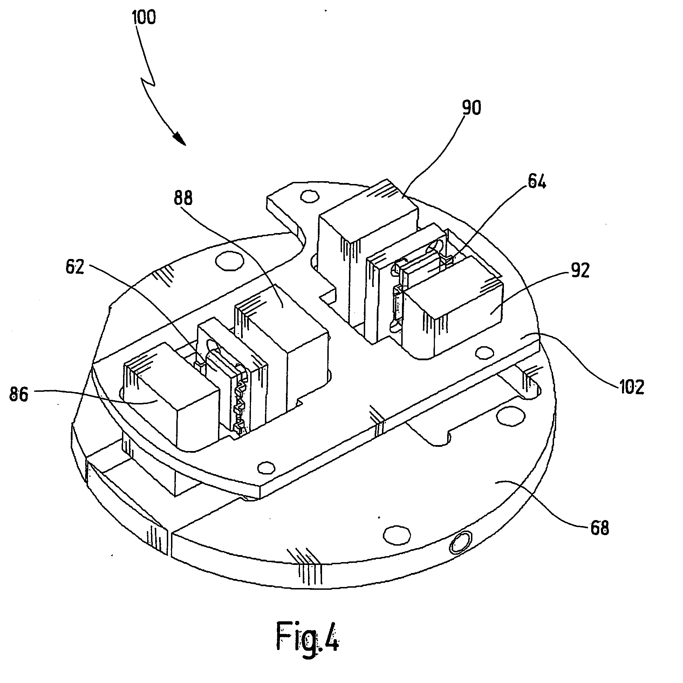

Um die Größe der Auslenkungen des Taststiftes 28 relativ zum Tastkopf 26 zu bestimmen, wird in dem bevorzugten Ausführungsbeispiel eine Sensoranordnung verwendet, wie sie nachfolgend anhand der Figuren 3 bzw. 4 beschrieben wird. Es sei jedoch darauf hingewiesen, dass die nachfolgend beschriebenen Ausführungsbeispiele von Sensoranordnungen grundsätzlich auch mit anderen Kinematikmodulen verwendet werden können.

In Fig. 3 ist ein erstes Ausführungsbeispiel einer Sensoranordnung in seiner Gesamtheit mit der Bezugsziffer 60 bezeichnet.

Die Sensoranordnung 60 besitzt ein erstes und ein zweites Hallelement 62, 64, die über jeweils eine senkrecht stehende Trägerplatte 66 an einer waagerechten Grundplatte 68 befestigt sind. Die Hallelemente 62, 64 sind kommerziell erhältliche ICs, die über die Trägerplatte 66 mit allen erforderlichen elektrischen Kontakten kontaktiert sind. Die Grundplatte 68 ist in der Darstellung in Fig. 3 weitgehend kreisförmig. Sie besitzt im Bereich unterhalb der Hallelemente 62, 64 zwei Ausnehmungen 70, die jedoch für die vorliegend beschriebene Funktion ohne Bedeutung sind.

Jedes der beiden Hallelemente 62, 64 ist von einem Ringabschnitt 72, 74 eines Trägerelements 76 umgeben. Die Ringabschnitte 72, 74 besitzen eine etwa quadratische Grundform und sind über einen Brückenabschnitt 78 miteinander verbunden. Auf dem Brückenabschnitt 78 ist eine zylinderförmige Aufnahme 80 angeordnet. Hier ist im zusammengebauten Zustand des Tastkopfes 26 die Taststiftverlängerung 54 eingesteckt, so dass das Trägerelement 76 den Auslenkungen des Taststiftes parallel zur Kardanebene 56 (siehe Fig. 2) folgt. Mit anderen Worten ist das Trägerelement 76 also derartig mit dem Taststift 28 verbunden, dass es dessen Auslenkungen in Richtung der Pfeile 82 und 84, im konkreten Anwendungsfall in X- und Y-Richtung, folgt.

Innerhalb des ersten Ringabschnitts 72 sind ein erster Magnet 86 und ein zweiter Magnet 88 so angeordnet, dass das erste Hallelement 62 mittig zwischen den beiden Magneten 86, 88 sitzt. In gleicher Weise sind innerhalb des zweiten Ringabschnitts 74 ein dritter Magnet 90 und ein vierter Magnet 92 angeordnet. Das zweite Hallelement 74 sitzt mittig zwischen den Magneten 90, 92. Dabei sind die beiden Magnete 90, 92 und das Hallelement 64 entlang einer gemeinsamen Fluchtlinie 94 angeordnet, ebenso wie die beiden Magnete 86, 88 und das erste Hallelement 62 (dort ist die Fluchtlinie aus Gründen der Übersichtlichkeit nicht gezeichnet). Die beiden Fluchtlinien sind parallel zur Kardanebene 56 um 90° verdreht zueinander.

In dem gezeigten Ausführungsbeispiel liegen die Magnete 86, 88 mit gleichnamigen Polen aufeinander zuweisend gegenüber. Gleiches gilt für die Magnete 90, 92 in dem zweiten Ringabschnitt 74. Diese Anordnung hat zur Folge, dass die beiden Hallelemente 62, 64 bei nicht ausgelenktem Taststift nicht von magnetischen Feldlinien durchsetzt sind, da sich die einander entgegengesetzten Feldlinienverläufe mittig zwischen den gleichnamigen Magnetpolen eliminieren. Sobald das Trägerelement 76 jedoch relativ zu den Hallelementen in X- und/oder Y-Richtung verschoben wird, rückt zumindest eines der Hallelemente 62, 64 aus dem "neutralen" Bereich zwischen den Magnetpolen heraus. Es kommt dann in den Einfluss der magnetischen Feldlinien desjenigen Magnetes, auf den es sich zu bewegt und infolgedessen entsteht an dem betroffenen Hallelement eine Spannung, deren Größe ein Maß für die Annäherung des Hallelements an den betroffenen Magneten ist.

Bei der Bezugsziffer 96 ist in Fig. 3 die magnetisch wirksame Fläche des Hallelements 62 angedeutet. Aus der Darstellung ergibt sich, dass die Breite b₁ der Magnete 86, 88 deutlich größer ist als die entsprechende (parallele) Breite b₂ der magnetisch wirksamen Fläche 96. In dem aktuell bevorzugten Ausführungsbeispiel beträgt die Breite b₁ der Magnete etwa 7 mm, während die Breite b₂ der magnetisch wirksamen Flächen der Hallelemente bei etwa 400 µm liegt. Darüber hinaus ist in dem bevorzugten Ausführungsbeispiel auch die Ausdehnung der Magnete 86 bis 92 in Z-Richtung erheblich größer als die entsprechende Ausdehnung der magnetisch wirksamen Fläche 96. Durch diese Größenabmessungen wird eine Unabhängigkeit der jeweiligen Ausgangssignale der Hallelemente 62, 64 von den Koordinatenrichtungen erreicht, die senkrecht zur gewünschten (relativen) Bewegungsrichtung 82 bzw. 84 liegen.

In dem bevorzugten Ausführungsbeispiel gemäß Fig. 3 besteht das Trägerelement 76 aus Weicheisen, d.h. es handelt sich hier um ein Flussführungselement für die magnetischen Feldlinien der Magnete 86 bis 92. Hierdurch wird ein guter Schutz vor Störfeldern erzielt, was zu der hohen Messgenauigkeit der Sensoranordnung 60 beiträgt.

In Fig. 4 ist ein weiteres Ausführungsbeispiel einer Sensoranordnung in seiner Gesamtheit mit Bezugsziffer 100 bezeichnet. Im Übrigen bezeichnen gleiche Bezugszeichen dieselben Elemente wie zuvor.

Die Sensoranordnung 100 unterscheidet sich von der Sensoranordnung 60 vor allem durch die Form des Trägerelements, an dem die Magnete 86 bis 92 befestigt sind. Im Unterschied zum vorhergehenden Ausführungsbeispiel ist das Trägerelement (hier mit Bezugsziffer 102 bezeichnet) scheibenförmig ausgebildet und damit leichter. Zudem besteht es hier nicht aus einem magnetisch leitfähigen Material. Andererseits sind zum Ausgleich dessen die Magnete 86 bis 92 deutlich stärker ausgebildet als im Ausführungsbeispiel gemäß Fig. 3. Die Funktionsweise der Sensoranordnung 100 ist jedoch die Gleiche wie in Fig. 3, wobei die hiesige Ausführung in Bezug auf die bewegten Massen günstiger ist.

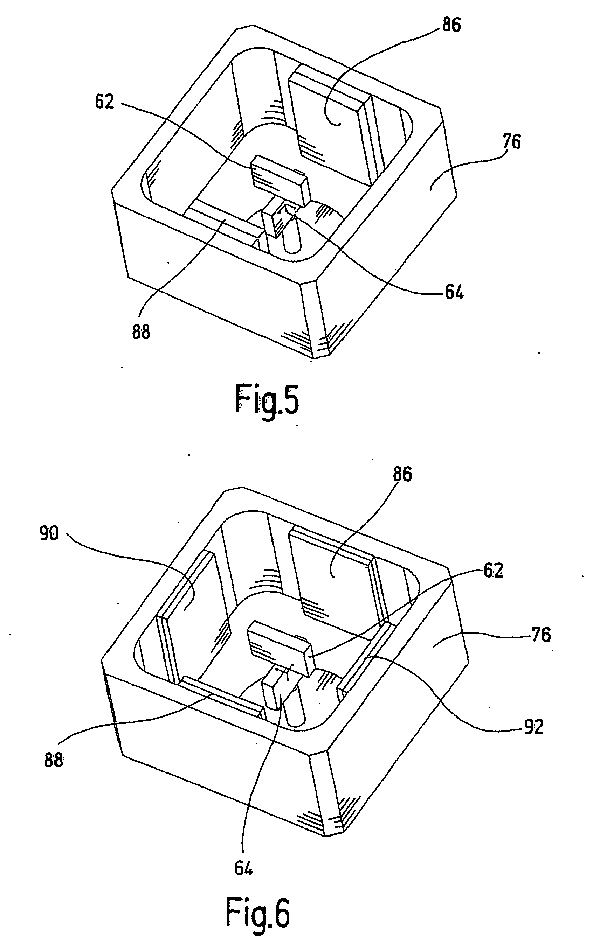

Fig. 5 zeigt ein nicht-erfindungsgemässes Beispiel und Fig. 6 zeigt ein Ausführungsbeispiel der Erfindung, bei denen die Hallelemente 62, 64 räumlich miteinander kombiniert sind. Hierdurch entsteht eine besonders kleinbauende und leichte Anordnung. In beiden Beispielen sind die beiden Hallelemente 62, 64 um 90° versetzt zueinander und übereinander angeordnet. Sie sitzen ferner mittig innerhalb eines (quadrat-) ringförmigen Trägerelements 76 aus einem magnetisch leitfähigen Material, beispielsweise aus Weicheisen. Konstruktiv kann die gezeigte Anordnung beispielsweise realisiert sein, indem das Hallelement 62 mechanisch an einem (hier nicht gezeigten) Deckel befestigt ist, während das Hallelement 64 an einem (ebenfalls nicht gezeigten) Boden angeordnet ist. Alternativ hierzu können die Hallelemente 62, 64 jedoch auch an einer gemeinsamen Basis, aneinander oder in anderer Weise befestigt sein.

Das gemeinsame Trägerelement trägt im Ausführungsbeispiel gemäß Fig. 6 vier Magnete 86 bis 92, die um jeweils 90° versetzt zueinander sind. Die Magnete 86, 88 sind die ersten und zweiten Magnete im Sinne der vorherigen Ausführungen und sie erzeugen das Magnetfeld, das mit dem Hallelement 62 zusammenwirkt. Die Magnete 90, 92 wirken mit dem Hallelement 64 zusammen. Eine Besonderheit dieses Ausführungsbeispiels liegt darin, dass die Magnete 86, 88 einerseits und die Magnete 90, 92 anderseits mit unterschiedlichen (untereinander aber jeweils gleichnamigen) Polen aufeinander zuweisen. Beispielsweise liegen sich die Magnete 86, 88 hier mit ihren Südpolen gegenüber und die Magnete 90, 92 mit ihren Nordpolen oder umgekehrt.

Das nicht-erfindungsgemässe Beispiel gemäß Fig. 5 besitzt demgegenüber nur die beiden Magnete 86, 88. Das Magnetfeld für das zweite Hallelement 64 wird von diesen beiden Magneten ausgehend über das Trägerelement 76 erzeugt. Diese Ausführung ist besonders leichtbauend.

In allen gezeigten Ausführungsbeispielen sind jeweils die Magnetanordnungen beweglich, während die Hallelemente feststehend sind. In einer Abwandlung hiervon ist es grundsätzlich auch möglich, dass die Magnetanordnungen feststehend ausgebildet sind, während die Hallelemente den Auslenkungen des Taststiftes folgen.

## Patentansprüche

1. Tastkopf für ein Koordinatenmessgerät, mit einem in einem Gehäuse beweglich gelagerten Taststift (28; 54) und mit einer Sensoranordnung (60; 100) zum Erfassen von Auslenkungen des Taststiftes (28; 54) relativ zu dem Gehäuse, wobei die Sensoranordnung (60; 100) einen ersten und einen zweiten Magneten (86, 88) und ein Hallelement (62) aufweist, wobei der zweite Magnet (88) gegenüberliegend von dem ersten Magneten (86) angeordnet ist, wobei zwischen den beiden Magneten (86, 88) eine Lücke verbleibt, und wobei das Hallelement (62) derart angeordnet ist, dass es sich bei einer Auslenkung des Taststiftes (28; 54) relativ zu den Magneten (86, 88) in der Lücke bewegt, **dadurch gekennzeichnet, dass** die Sensoranordnung (60; 100) zumindest ein weiteres Hallelement (64), das um etwa 90° verdreht zu dem ersten Hallelement (62) angeordnet ist, und einen dritten und einen vierten Magneten (90, 92) aufweist, zwischen denen zumindest das weitere Hallelement (64) angeordnet ist, wobei die Magnete (86, 88, 90, 92) an einem gemeinsamen Trägerelement (76; 102) befestigt sind, und wobei die Hallelemehte (62, 64) jeweils eine magnetisch wirksame Fläche mit einer Breite (b₂) besitzen, die etwa 1/10 oder weniger der Breite (b₁) der Magnete (86, 88, 90, 92) beträgt.

2. Tastkopf nach Anspruch 1, **dadurch gekennzeichnet, dass** der erste und der zweite Magnet (86, 88) mit jeweils gleichnamigen Polen aufeinanderzuweisend angeordnet sind und dass das Hallelement (62) so angeordnet ist, dass es sich bei einer Auslenkung des Taststiftes (28; 54) parallel zu, und vorzugsweise auf einer gedachten Fluchtlinie (94) zwischen den gleichnamigen Polen bewegt.

3. Tastkopf nach Anspruch 1 oder 2, **dadurch gekennzeichnet, dass** das Hallelement (62) bei nicht-ausgelenktem Taststift (28; 54) in gleichem Abstand zu dem ersten und zweiten Magneten (86, 88) angeordnet ist.

4. Tastknopf nach einem der Ansprüche 1 bis 3, **dadurch gekennzeichnet, dass** der erste und zweite Magnet (86, 88) mit dem beweglichen Taststift (28; 54) gekoppelt sind und dass das Hallelement (62) auf einer Basis (66, 68) angeordnet ist, die relativ zu den Magneten (86, 88) feststehenden ist.

5. Tastkopf nach einem der Ansprüche 1 bis 4, **dadurch gekennzeichnet, dass** der dritte und vierte Magnet (90, 92) sowie das weitere Hallelement (64) räumlich getrennt von dem ersten und zweiten Magneten (86, 88) angeordnet sind.

6. Tastkopf nach einem der Ansprüche 1 bis 5, **dadurch gekennzeichnet, dass** das erste Hallelement (62) und das weitere Hallelement (64) zwischen dem ersten und zweiten Magneten (90, 92) angeordnet sind.

7. Tastkopf nach einem der Ansprüche 1 bis 6, **dadurch gekennzeichnet, dass** das gemeinsame Trägerelement (76) ein Flussführungselement ist.

8. Tastkopf nach Anspruch 7, **dadurch gekennzeichnet, dass** das Flussführungselement (76) einen ersten und einen zweiten Ringabschnitt (72, 74) aufweist, wobei der erste Ringabschnitt (72) den ersten und zweiten Magneten (86, 88) ringförmig verbindet und wobei der zweite Ringabschnitt (74) den dritten und vierten Magneten (90, 92) ringförmig verbindet.

9. Tastkopf nach Anspruch 8, **dadurch gekennzeichnet, dass** das Flussführungselement (76) einen Brückenabschnitt (78) aufweist, der den ersten und zweiten Ringabschnitt (72, 74) miteinander verbindet, wobei der Brückenabschnitt (76) mit dem Taststift (28; 54) gekoppelt ist.

10. Tastknopf nach einem der Ansprüche 1 bis 9, **gekennzeichnet durch** Federelemente (44, 46, 48, 50, 52), die eine Auslenkung des Taststiftes (28; 54) in zumindest zwei Raumrichtungen (82, 84) ermöglichen, wobei die Sensoranordnung (60; 100) räumlich getrennt von den Federelementen (44, 46, 48, 50, 52) angeordnet ist.

11. Tastknopf nach Anspruch 10, **dadurch gekennzeichnet, dass** die Federelemente (44, 46, 48, 50, 52) eine Membranfeder (52) beinhalten, die die Auslenkung des Taststiftes (28; 54) in den zwei Raumrichtungen entlang einer Kardanebene (56) ermöglicht, wobei die Sensoranordnung (60; 100) außerhalb der Kardanebene (56) angeordnet ist.

12. Koordinatenmessgerät zum Vermessen einer Objektform eines Messobjekts (30), mit einem Verschiebegestell (14, 16, 18), an dem ein Tastkopf (26) mit einem Taststift (28) zum Antasten des Messobjekts (30) angeordnet ist, und mit einer Auswerteeinheit (32), die dazu ausgebildet ist, eine aktuelle Raumposition des Tastelements (28) zu bestimmen, **gekennzeichnet durch** einen Tastkopf (26) nach einem der Ansprüche 1 bis 11.

## Claims

1. A probe head for a coordinate measuring machine, comprising a stylus (28; 54) movably arranged within a housing, and comprising a sensor arrangement (60; 100) for detecting any displacements of the stylus (28; 54) relative to the housing, wherein the sensor arrangement (60; 100) comprises a first and a second magnet (86, 88) and a Hall-effect element (62), wherein the second magnet (88) is arranged opposite to the first magnet (86), wherein a gap remains between the two magnets (86, 88), and wherein the Hall-effect element (62) is arranged such that it moves relative to the magnets (86, 88) in the gap at a displacement of the stylus (28; 54), **characterized in that** the sensor arrangement (60; 100) comprises at least one further Hall-effect element (64) and a third and a fourth magnet (90, 92), with the at least one further Hall-effect element (64) being arranged rotated about 90° with respect to the first Hall-effect element (62) and between the third and fourth magnets (90, 92), wherein the magnets (86, 88, 90, 92) are secured to a common support element (76; 102), and wherein the Hall-effect elements (62, 64) each comprise a magnetically-effective area having a width (b₂) of about 1/10 or less of the width (b₁) of the magnets (86, 88, 90, 92).

2. The probe head according to claim 1, **characterized in that** the first and the second magnet (86, 88) are arranged with like poles facing each other, and the Hall-effect element (62) is arranged such that it moves in parallel, and preferably on an imaginary alignment line (94) between the like poles at a displacement of the stylus (28; 54).

3. The probe head according to claim 1 or 2, **characterized in that** the Hall-effect element (62) is arranged with equal spacing to the first and second magnets (86, 88), when the stylus (28; 54) is not displaced.

4. The probe head according to one of claims 1 to 3, **characterized in that** the first and second magnets (86, 88) are coupled to the movable stylus (28; 54), and the Hall-effect element (62) is arranged on a base (66, 68), which is stationary relative to the magnets (86, 88).

5. The probe head according to one of claims 1 to 4, **characterized in that** the third and fourth magnets (90, 92) and the further Hall-effect element (64) are arranged spatially separated from the first and second magnets (86, 88).

6. The probe head according to one of claims 1 to 5, **characterized in that** the first Hall-effect element (62) and the further Hall-effect element (64) are arranged between the first and second magnets (90, 92).

7. The probe head according to one of claims 1 to 6, **characterized in that** the common support element (76) is a magnetic flux guiding element.

8. The probe head according to claim 7, **characterized in that** the magnetic flux guiding element (76) comprises a first and a second ring section (72, 74), wherein the first ring section (72,) connects the first and the second magnets (86, 88) in a ring-shaped manner, and wherein the second ring section (74) connects the third and fourth magnets (90, 92) in a ring-shaped manner.

9. The probe head according to claim 8, **characterized in that** the magnetic flux guiding element (76) comprises a bridge section (78), which connects the first and second ring sections (72, 74) to one another, wherein the bridge section (76) is coupled to the stylus (28; 54).

10. The probe head according to one of claims 1 to 9, **characterized by** spring elements (44, 46, 48, 50, 52) which allow a displacement of the stylus (28; 54) in at least two spatial directions (82, 84), wherein the sensor arrangement (60; 100) is spatially separated from the spring elements (44, 46, 48, 50, 52).

11. The probe head according to claim 10, **characterized in that** the spring elements (44, 46, 48, 50, 52) include a membrane spring (52) which allows the displacement of the stylus (28; 54) in the two spatial directions along a cardanic plane (56), wherein the sensor arrangement (60; 100) is arranged outside from the cardanic plane (56).

12. A coordinate measuring machine for measuring an object shape of a measurement object (30), comprising a movable base frame (14, 16, 18) with a probe head (26) having a stylus (28) for touching the measurement object (30) being arranged, and comprising an evaluation unit (32) which is configured to determine a current spatial position of the stylus, **characterized by** a probe head (26) according to one of claims 1 to 11.

## Revendications

1. Tête de palpage pour un appareil de mesure de coordonnées, avec un palpeur (28 ; 54) logé de manière mobile dans un boîtier et avec une disposition de capteurs (60 ; 100) destinée à détecter des déviations du palpeur (28 ; 54) par rapport au boîtier, la disposition de capteurs (60 ; 100) présentant un premier et un deuxième aimants (86, 88) et un élément à effet Hall (62), le deuxième aimant (88) étant disposé à l'opposé du premier aimant (86), entre les deux aimants (86, 88) restant un vide, et l'élément à effet Hall (62) étant disposé de telle sorte qu'il se déplace lors d'une déviation du palpeur (28 ; 54) par rapport aux aimants (86, 88) dans le vide, **caractérisée en ce que** la disposition de capteurs (60 ; 100) présente au moins un autre élément à effet Hall (64) qui est disposé pivoté à environ 90° par rapport au premier élément à effet Hall (62), et un troisième et un quatrième aimants (90, 92), entre lesquels au moins l'autre élément à effet Hall (64) est disposé, les aimants (86, 88, 90, 92) étant fixés sur un élément support commun (76 ; 102), et les élément à effet Hall (62, 64) possédant chacun une surface à effet magnétique avec une largeur (b₂) qui s'élève à environ 1/10 ou moins de la largeur (b₁) des aimants (86, 88, 90, 92).

2. Tête de palpage selon la revendication 1, **caractérisée en ce que** le premier et le deuxième aimants (86, 88) dotés de pôles respectivement de même signe sont disposés dirigés l'un vers l'autre et **en ce que** l'élément à effet Hall (62) est disposé de telle manière qu'il se déplace lors d'une déviation du palpeur (28 ; 54) parallèlement à, et de préférence, sur une ligne de fuite (94) imaginaire entre les pôles de même signe.

3. Tête de palpage selon la revendication 1 ou 2, **caractérisée en ce que** l'élément à effet Hall (62) est disposé à la même distance par rapport au premier et au deuxième aimants (86, 88), lorsque le palpeur n'est pas dévié (28 ; 54).

4. Tête de palpage selon l'une quelconque des revendications 1 à 3, **caractérisée en ce que** le premier et le deuxième aimants (86, 88) sont couplés au palpeur mobile (28 ; 54) et **en ce que** l'élément à effet Hall (62) est disposé sur une base (66, 68) qui est fixe par rapport aux aimants (86, 88).

5. Tête de palpage selon l'une quelconque des revendications 1 à 4, **caractérisée en ce que** le troisième et le quatrième aimants (90, 92) ainsi que l'autre élément à effet Hall (64) sont disposés de manière séparée dans l'espace du premier et du deuxième aimants (86, 88).

6. Tête de palpage selon l'une quelconque des revendications 1 à 5, **caractérisée en ce que** le premier élément à effet Hall (62) et l'autre élément à effet Hall (64) sont disposés entre le premier et le deuxième aimants (90, 92).

7. Tête de palpage selon l'une quelconque des revendications 1 à 6, **caractérisée en ce que** l'élément support commun (76) est un élément de guidage de flux.

8. Tête de palpage selon la revendication 7, **caractérisée en ce que** l'élément de guidage de flux (76) présente une première et une deuxième sections annulaires (72, 74), la première section annulaire (72) reliant sous forme d'anneau le premier et le deuxième aimants (86, 88) et la deuxième section annulaire (74) reliant sous forme d'anneau le troisième et le quatrième aimants (90, 92).

9. Tête de palpage selon la revendication 8, **caractérisée en ce que** l'élément de guidage de flux (76) présente une section en forme de pont (78) qui relie la première et la deuxième sections annulaires (72, 74) entre elles, la section en forme de pont (76) étant couplée au palpeur (28 ; 54).

10. Tête de palpage selon l'une quelconque des revendications 1 à 9, **caractérisée par** des éléments de ressort (44, 46, 48, 50, 52) qui permettent une déviation du palpeur (28 ; 54) dans au moins deux directions dans l'espace (82, 84), la disposition de capteurs (60 ; 100) étant disposée de manière séparée dans l'espace des éléments de ressort (44, 46, 48, 50, 52).

11. Tête de palpage selon la revendication 10, **caractérisée en ce que** les éléments de ressort (44, 46, 48, 50, 52) comprennent un ressort à diaphragme (52) qui permet la déviation du palpeur (28 ; 54) dans les deux directions dans l'espace le long d'un plan de Cardan (56), la disposition de capteurs (60 ; 100) étant disposée en dehors du plan de Cardan (56).

12. Appareil de mesure de coordonnées destiné à mesurer une forme d'un objet de mesure (30), avec un bâti mobile (14, 16, 18), sur lequel est disposée une tête de palpage (26) dotée d'un palpeur (28) destiné à palper l'objet de mesure (30), et avec une unité d'évaluation (32) qui est conçue afin de déterminer une position spatiale actuelle de l'élément de palpage (28), **caractérisé par** une tête de palpage (26) selon l'une quelconque des revendications 1 à 11.
